# EUROPÄISCHE PATENTSCHRIFT

(11) **EP 0 957 552 B1**
(45) Veröffentlichungstag und Bekanntmachung des Hinweises auf die Patenterteilung: **24.03.2004**
(21) Anmeldenummer: 99108829.5
(22) Anmeldetag: 04.05.1999
(51) Int. Cl.: H02G 3/12

(54) **Gerätedose für Elektro-Installationsgeräte**
Box for electrical apparatus
Boîtier pour appareillage d'installation électrique

(30) Priorität: 11.05.1998 DE 29808495 U
(43) Veröffentlichungstag der Anmeldung: 17.11.1999
(73) Patentinhaber: GIRA GIERSIEPEN GmbH. & CO. KG., D-42477 Radevormwald (DE); Kunststoffwerke GGK GmbH & Co. KG, 35753 Greifenstein (DE)
(72) Erfinder: Broig, Karl-Heinz, 58515 Lüdenscheid (DE); Müller, Hans-Jörg, 58256 Ennepetal-Königsfeld (DE); Fischer, Stefan, 42929 Wermelskirchen (DE); Schmidt, Christian, 35753 Greifenstein-Allendorf (DE); Müller, Eckhard, 35781 Weilburg (DE); Fennel, Bernd, 32584 Löhne (DE)
(74) Vertreter: Zapf, Christoph, Dipl.-Ing.

(56) Entgegenhaltungen:
- EP-A- 0 391 713
- GB-A- 2 229 869
- US-A- 1 601 312

## Beschreibung

Die vorliegende Erfindung betrifft eine Gerätedose zur Aufnahme von Elektro-Installationsgeräten, wie Schalter, Steckdosen und dergleichen, mit einem einen einseitig offenen Geräte-Aufnahmeraum begrenzenden Dosenkörper, wobei der Dosenkörper aus einem Profilabschnitt eines im Querschnitt im wesentlichen U-förmigen Profilstranges und zwei mit dem Profilabschnitt zur Begrenzung des Aufnahmeraumes in Profillängsrichtung gesehen verbindbaren Wandungsteilen besteht.

Bekannte Gerätedosen dienen zur Montage von Elektro-Installationsgeräten, indem zunächst die Dose beispielsweise unter Putz (UP) oder auf Putz (AP) montiert und dann das jeweilige Gerät eingesetzt und befestigt wird. Zudem können solche Gerätedosen auch zur mittelbaren Halterung von Installationsgeräten in Kabelkanälen oder sonstigen größeren Aufnahmegehäusen verwendet werden.

So ist beispielsweise in jedem der Dokumente DE-C-38 29 327, DE-C-39 05 226 und DE-C-43 31 580 eine Einbaudose beschrieben, die über Haltemittel an einem speziellen Bodenhalteprofil eines Kabelkanals befestigt werden kann. Danach kann das jeweilige Installationsgerät in die Dose eingesetzt, darin befestigt und schließlich verkabelt werden.

Die bekannten Gerätedosen sind in der Regel als einstückige Formteile aus Kunststoff hergestellt, wobei die Größe jeweils an die Größe und Anzahl der einzusetzenden Geräte angepaßt sein muß. Deshalb sind für die Einzelgeräte und Gerätekombinationen aus mehreren Einzelgeräten jeweils verschiedene Dosen-Ausführungen erforderlich. Dies führt zu einem recht hohen Aufwand für die Herstellung (mehrere verschiedene Spritzwerkzeuge sind erforderlich) und auch für die Logistik, wie Lagerhaltung und Transport.

Die GB-A-2 229 869 beschreibt eine Gerätedose gemäß dem Oberbegriff des Patentanspruchs 1. Es handelt sich um einen "Dosenkörper", der aus einem Profilabschnitt eines im Querschnitt im Wesentlichen U-förmigen Profilstranges besteht. Stimseitig wird dieser Dosenkörper durch Wandungsteile verschlossen. Bei dieser bekannten Gerätedose werden die stimseitigen Wandungsteile mit vier zapfenartigen Ansätzen in Profillängsrichtung bis zu einer Anschlagstellung angesetzt, in der sie selbst vor den offenen Stimseiten des Profilstranges liegen. Dazu sind die Wandungsteile in einer recht speziellen, kappenartigen Form ausgeführt.

Die US-A-1 601 312 beschreibt keinen aus einem Profilabschnitt eines "Endlosprofils" bestehenden Dosenkörper, sondern ein als Blechbiegeteil ausgebildetes Gehäuse.

Der vorliegenden Erfindung liegt die Aufgabe zugrunde, eine Gerätedose zu schaffen, die eine höhere Wirtschaftlichkeit in bezug auf Herstellung, Logistik und auch Montage gewährleistet.

Erfindungsgemäß wird dies durch die Merkmale des Patentanspruchs 1 erreicht. Vorteilhafte Weiterbildungen der Erfindung sind Gegenstand der abhängigen Ansprüche.

Ein die Größe des Dosenkörpers bestimmender Profilabschnitt kann mit praktisch beliebiger Länge von dem als "Endlosprofil" vorgefertigten Profilstrang abgelängt werden. Es brauchen dann nur noch auf beiden Stirnseiten zwei Wandungsteile eingesetzt zu werden, wozu bevorzugt die Wandungsteile jeweils über Rastverbindungen befestigbar sind. Dadurch, dass jedes Wandungsteil beliebig an verschiedenen Stellen der Längserstreckung des Profilabschnitts in dieses einsetzbar ist, können die Wandungsteile auch als Trennwandelemente lösbar beispielsweise zur Unterteilung des Innenraums des Profilabschnittes eingesetzt werden.

Die Herstellung einer erfindungsgemäßen Gerätedose ist sehr kostengünstig, da lediglich der Profilstrang als Endlosprofil hergestellt, insbesondere extrudiert zu werden braucht. Die Wandungsteile können ebenfalls sehr preiswert hergestellt werden, indem sie identisch ausgeführt sind, so dass sie in ein und demselben Werkzeug geformt werden können.

In einer vorteilhaften Ausgestaltung der Erfindung ist vorgesehen, daß der Profilabschnitt im Bereich seiner Längsseitenwandungen Halterungsmittel zur unmittelbaren Befestigung mindestens eines Geräteeinsatzes eines Elektro-Installationsgerätes aufweist. Hierdurch kann der Geräteeinsatz unmittelbar und deshalb schnell und einfach befestigt werden. Da übliche Installationsgeräteeinsätze in der Regel mit jeweils einem sogenannten Tragring ausgestattet sind, bei dem es sich zumeist um ein etwa ringförmiges Blechteil handelt, ist es vorteilhaft, wenn zur unmittelbaren Halterung eines solchen Tragringes die erfindungsgemäßen Halterungsmittel im von einer Bodenwandung abgekehrten, oberen Randbereich der Längsseitenwandungen des Profilabschnittes vorgesehen sind. Es handelt sich dabei praktisch um eine neuartige "Tragring-Schnellbefestigung", wodurch über den Tragring das jeweilige Installationsgerät schnell und einfach in der Gerätedose montiert werden kann.

Der Raum zwischen der Bodenwandung und den beiden Längsseitenwandungen kann somit an beliebigen Stellen der Längserstreckung des Profilstranges zur Unterbringung von Installationsgeräten genutzt werden, wobei die quer zur Längserstreckung gemessene Breite etwa der entsprechenden Abmessung des Tragrings entspricht: Aus diesem Grund ist es - insbesondere für eine Anwendung mit relativ großer Länge für Gerätekombinationen mit mehreren Einzelgeräten und die dabei erforderlichen elektrischen Verbindungen - vorteilhaft, wenn zumindest auf einer Längsseite des Profilabschnittes zwischen der jeweiligen Längsseitenwandung und einer dazu etwa parallel beabstandeten Außenwandung ein Aufnahmekanal für Kabel und dergleichen gebildet ist. In diesem Fall kann die jeweilige Längsseitenwandung in bestimmten Abständen Kabel-Durchführöffnungen aufweisen, um das jeweilige durch den Aufnahmekanal verlaufende Kabel zu dem zugehörigen Installationsgerät führen zu können. Bei einer Ausführungsform mit zwei auf beiden Längsseiten vorgesehenen Aufnahmekanälen kann vorteilhafterweise eine Trennung von Leitungen je nach deren Verwendungszweck erfolgen. Beispielsweise können elektrische Energieversorgungskabel in einem der beiden Aufnahmekanäle geführt werden, während z.B. Leitungen der Kommunikationstechnik im anderen Aufnahmekanal untergebracht werden können. Hierbei können die Aufnahmekanäle bezüglich ihrer lichten Innenquerschnitte unterschiedlich groß ausgelegt werden; für zahlreichere und/oder dickere Leitungen kann dann bevorzugt der größere Aufnahmekanal genutzt werden.

Wie obenbereits erwähnt können die Wandungsteile auch jeweils als Trennwandelement lösbar und wahlweise an verschiedenen Stellen der Längserstreckung in den Profilabschnitt z.B. zur Unterteilung des Innenraums des Profilabschnittes eingesetzt werden. Diese erfindungsgemäße Maßnahme dient auch zur elektrischen Isolation zwischen benachbarten Geräten (nach VDE). Zudem kann über die Wandungsteile auch eine zusätzliche mechanische Befestigung der Geräteeinsätze bzw. der Tragringe erfolgen. Weiterhin kann in bevorzugter Ausgestaltung der Erfindung jeweils ein Wandungsteil mit Haltemitteln für einen speziellen Kommunikationsgeräteeinsatz integriert ausgebildet sein. Um bei Bedarf auch durch den Profilabschnitt hindurch, und zwar in einem zwischen der Bodenwandung und dem oder den Installationsgeräten verbleibenden Raum, Kabel führen zu können, können die Wandungsteile vorzugsweise auch mit entsprechenden Durchführöffnungen ausgebildet sein.

Zum Verschließen der Gerätedose ist vorzugsweise ein Verschlußdeckel vorgesehen, der vor Montage an den Stellen der in der Dose angeordneten Geräte entsprechende Öffnungen erhält.

Weitere vorteilhafte Ausgestaltungsmerkmale der Erfindung sind in den Unteransprüchen sowie der folgenden Beschreibung enthalten.

Anhand von mehreren in der Zeichnung dargestellten, vorteilhaften Ausführungsbeispielen soll die Erfindung nun genauer erläutert werden. Dabei zeigen:
- Fig. 1: eine Perspektivansicht einer ersten Ausführungsform einer erfindungsgemäßen Gerätedose,
- Fig. 2: die Ausführungsform nach Fig. 1 mit zusätzlicher Darstellung von gehalterten Tragringen,
- Fig. 3: eine erste Ausführungsvariante der Ausführung nach Fig. 1 und 2,
- Fig. 4: eine zweite Ausführungsvariante der Ausführung nach Fig. 1 und 2,
- Fig. 5: eine Perspektivansicht einer weiteren Ausführungsform der erfindungsgemäßen Gerätedose,
- Fig. 6: eine weitere Ansicht der Dose gemäß Fig. 5 in einer etwas anderen Perspektive,
- 'Fig. 7: eine Ansicht analog zu Fig. 6 mit vorteilhaften Ausgestaltungsmerkmalen,
- Fig. 8: eine Perspektivansicht einer weiteren Ausführungsform der erfindungsgemäßen Gerätedose,
- Fig. 9: noch eine weitere Ausführungsform der Gerätedöse wiederum in Perspektivansicht,
- Fig. 10: eine Stirnansicht in Pfeilrichtung X gemäß Fig. 9,
- Fig. 11: eine Perspektivansicht eines längeren Profilstranges zur Herstellung von Gerätedosen nach der Erfindung,
- Fig. 12: eine Stirnansicht etwa in der Ausführung nach Fig. 6, jedoch mit einem zusätzlichen Verschlußdeckel und
- Fig. 13: eine Ansicht wie in Fig. 12, jedoch in einer vorteilhaften Ausgestaltung.

In den verschiedenen Figuren der. Zeichnung sind gleiche Teile stets mit den gleichen Bezugszeichen versehen und werden daher in der Regel auch jeweils nur einmal beschrieben.

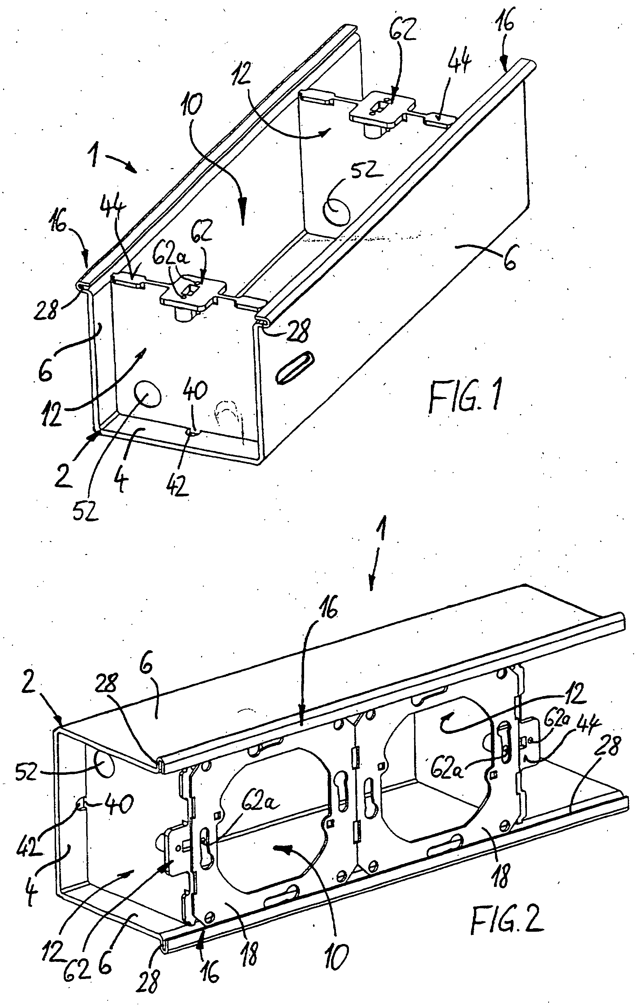

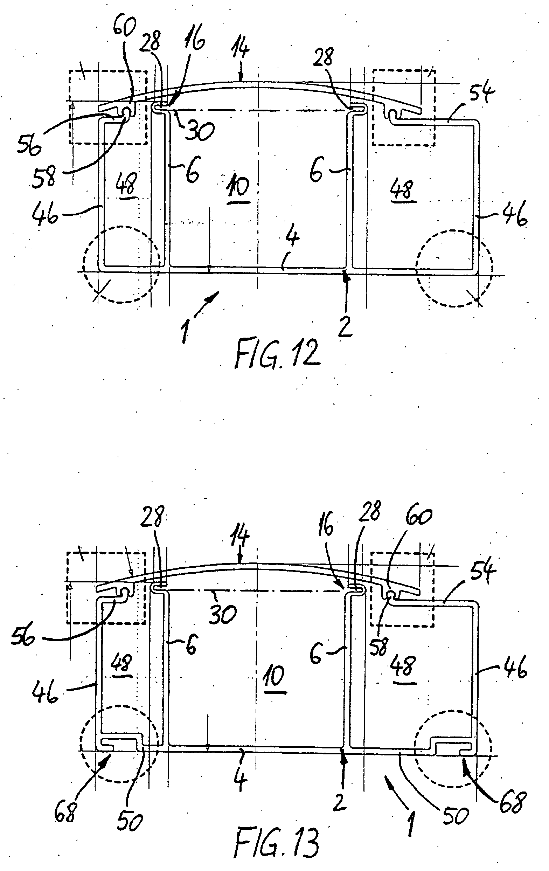

Wie sich beispielsweise aus Fig. 1 und 2 ergibt, besteht eine erfindungsgemäße Gerätedose 1 aus einem im Querschnitt im wesentlichen U-förmigen Profilabschnitt 2 mit einer Bodenwandung 4 und zwei im wesentlichen zueinander parallelen sowie zur Bodenwandung 4 jeweils etwa senkrechten Längsseitenwandungen 6. Der Profilabschnitt 2 wird mit einer jeweils gewünschten Länge von einem als "Endlosprofil" vorgefertigten Profilstrang 8 (vgl. hierzu Fig. 11) abgeschnitten. Zur Begrenzung eines einseitig, und zwar der Bodenwandung 4 gegenüberliegend offenen Geräte-Aufnahmeraumes 10 sind auf beiden Stirnseiten des Profilabschnittes 2 Wandungsteile 12 befestigbar. Zu der Gerätedose 1 gehört außerdem vorzugsweise ein Verschlußdeckel 14, der jedoch nur in den Fig. 12 und 13 dargestellt ist. Der Verschlußdeckel 14 ist mit dem Profilabschnitt 2 auf dessen der Bodenwandung 4 gegenüberliegenden, offenen Seite lösbar verbindbar, um den von dem Profilabschnitt 2 gebildeten Aufnahmeraum 10 zu verschließen.

Bevorzugt ist vorgesehen, daß der Profilabschnitt 2 im Bereich der Längsseitenwandungen 6 Halterungsmittel 16 zur unmittelbaren Befestigung mindestens eines Geräteeinsatzes eines Elektro-Installationsgerätes aufweist. Von diesem Geräteeinsatz ist in den Zeichnungsfiguren jeweils lediglich ein sogenannter Tragring 18 dargestellt, wobei es sich in an sich bekannter Weise um ein im wesentlichen ringförmiges und in der Regel aus Metallblech bestehendes Halteteil handelt, an dem der selbst nicht dargestellte Geräteeinsatz befestigt ist. Bei dem Geräteeinsatz selbst kann es sich beispielsweise um eine Steckdose, einen Schalter oder dergleichen handeln.

Vorzugsweise sind die erfindungsgemäßen Halterungsmittel 16 zur unmittelbaren Halterung des jeweiligen Tragringes 18 im von der Bodenwandung 4 abgekehrten, oberen Randbereich der Längsseitenwandungen 6 vorgesehen. Hierfür gibt es mehrere Möglichkeiten, die im folgenden genauer erläutert werden sollen.

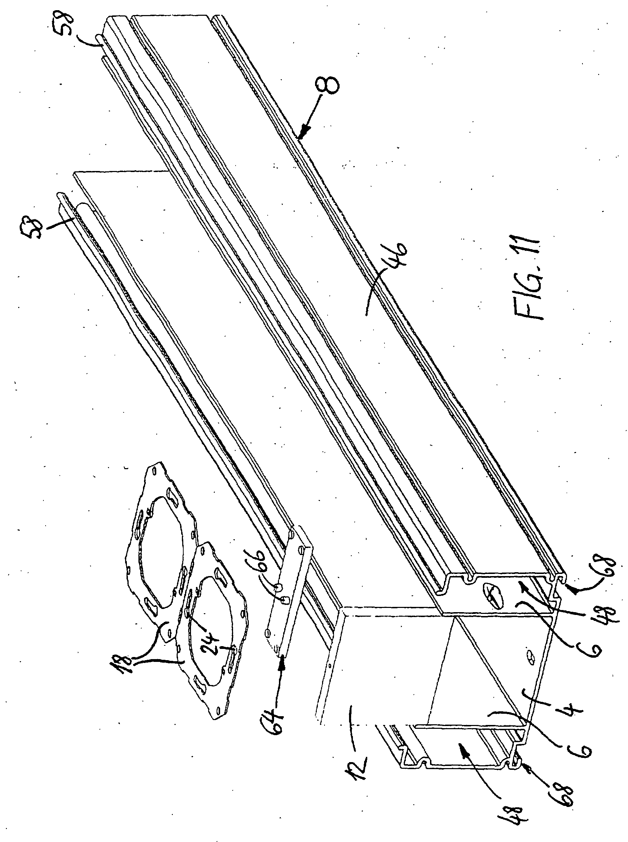

Bei der Ausführungsform nach Fig. 9 und 10 ist der jeweilige Tragring 18 in einer auf oberen Längskanten 20 der Längsseitenwandungen 6 aufliegenden Position über Klammerelemente 22 kraft- und/oder formschlüssig mit' den Längsseitenwandungen 6 verbindbar. Die Klammerelemente 22 sind jeweils U-förmig mit zwei etwa parallelen HalteSchenkeln 22a und 22b ausgebildet (s. insbesondere Fig. 10), und sie übergreifen jeweils bereichsweise den Tragring und den darunterliegenden Randbereich der Längsseitenwandung 6, wobei jeweils einer der beiden Halteschenkel (wie dargestellt 22b) durch eine insbesondere schlüssellochartige Öffnung 24 des Tragrings 18 geführt wird. Zwischen den beiden Halteschenkeln 22a,b liegt dann der jeweilige Randabschnitt der Längsseitenwandung 6. Dabei ist wenigstens einer der beiden Halteschenkel - wie dargestellt 22a - mit der Längsseitenwandung 6 insbesondere formschlüssig verrastet. Dazu weist der Halteschenkel 22a eine Haltenase auf, die in eine längs verlaufende Haltenut 26 der Längsseitenwandung 6 eingreift.

Bei den unter anderem in Fig. 1 bis 7 dargestellten Ausführungsformen weisen die Längsseitenwandungen 6 als Halterungsmittel 16 einander zugekehrte, längsverlaufende Haltenuten 28 zur halternden Aufnahme von gegenüberliegenden Randbereichen des Tragringes 18 auf. Wie dargestellt, sind die Haltenuten 28 bevorzugt durch einen im Querschnitt etwa hakenförmigen Verlauf des Endbereichs der jeweiligen Längsseitenwandung 6 gebildet, wodurch sich ein schienenartiges Halteprofil ergibt. Der jeweilige Tragring 18 kann hierdurch in Profillängsrichtung in die Haltenuten 28 eingeschoben werden. Außerdem ist es durch eine elastische Beweglichkeit der Längsseitenwandungen 6 gegebenenfalls auch möglich, den Tragring 18 zunächst mit einem Randbereich in eine der beiden Haltenuten 28 einzusetzen und dann durch Verkippen den gegenüberliegenden Randbereich in die andere Haltenut 28 einzurasten. Wie sich aus Fig. 12 und 13 ergibt, bilden hierbei die Haltenuten 28 mit ihren jeweils unteren, d.h. der Bodenwandung 4 nächstliegenden Flächen eine Auflageebene 30 für den Tragring 18.

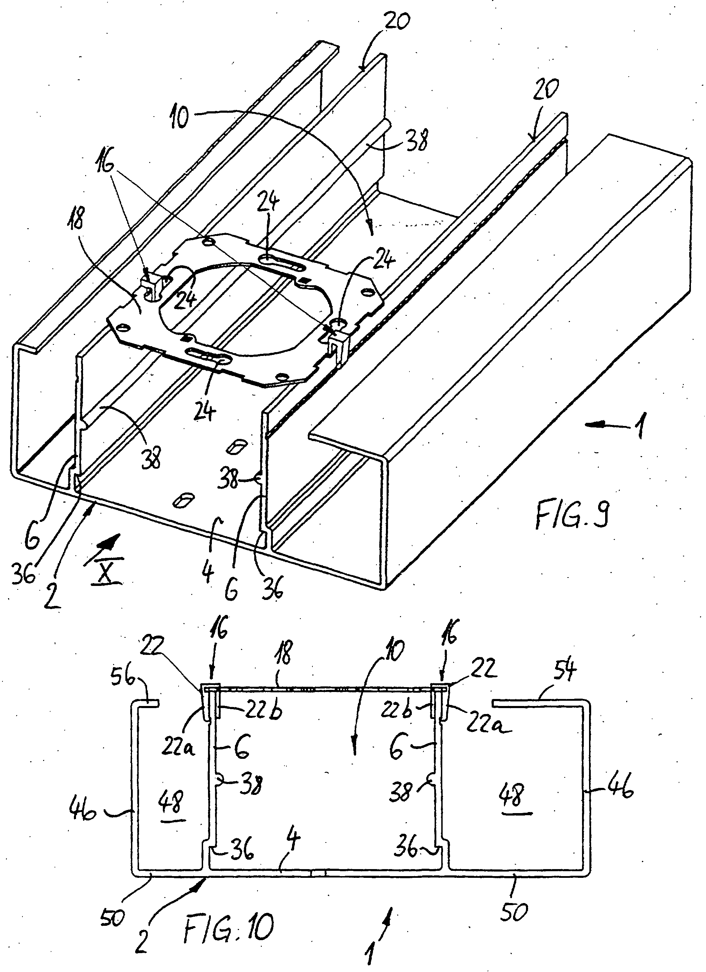

Bei der in Fig. 8 veranschaulichten Ausführungsform ist der Tragring 18 mittels nicht dargestellter Schrauben an den Längsseitenwandungen 6 befestigbar. Hierzu ist vorzugsweise im oberen 'Randbereich jeder Längsseitenwandung 6 eine längsverlaufende, in die von der Bodenwandung 4 wegweisende Richtung (nach oben) offene Montagenut 32 derart gebildet, daß jeweils eine insbesondere selbstschneidende Schraube durch eine der Öffnungen 24 des auf den Längsseitenwandungen 6 aufliegenden Tragringes 18 hindurch in die jeweilige Montagenut 32 einschraubbar ist. Hierdurch kann vorteilhafterweise der Tragring 18 an einer beliebigen Stelle der Längserstreckung mit den Längsseitenwandungen 6 verschraubt werden, weil die entsprechenden Schrauben an jeder Stelle der jeweiligen Montagenut 32 einschraubbar sind.

Wie sich beispielsweise aus Fig. 1 bis 7 ergibt, ist jedes Wandungsteil 12 zur Unterteilung des langgestreckten Innenraums des Profilabschnittes 2 bzw. zur Begrenzung des Geräte-Aufnahmeraumes 10 wahlweise an verschiedenen Stellen der Längserstreckung lösbar in den Profilabschnitt 2 einsetzbar. Dadurch kann mit jeweils zwei Wandungsteilen 12 Aufnahmeraum 10 in beiden Längsrichtungen abgegrenzt werden. Somit kann erfindungsgemäß auf einfache Weise eine Gerätedose 1 aus dem Profilabschnitt 2 gebildet werden. Das bzw. jedes Wandungsteil 12 ist hierbei bevorzugt kraftund/oder formschlüssig mit den Längsseitenwandungen 6 und/oder mit der Bodenwandung 4 verbindbar, insbesondere verrastbar.

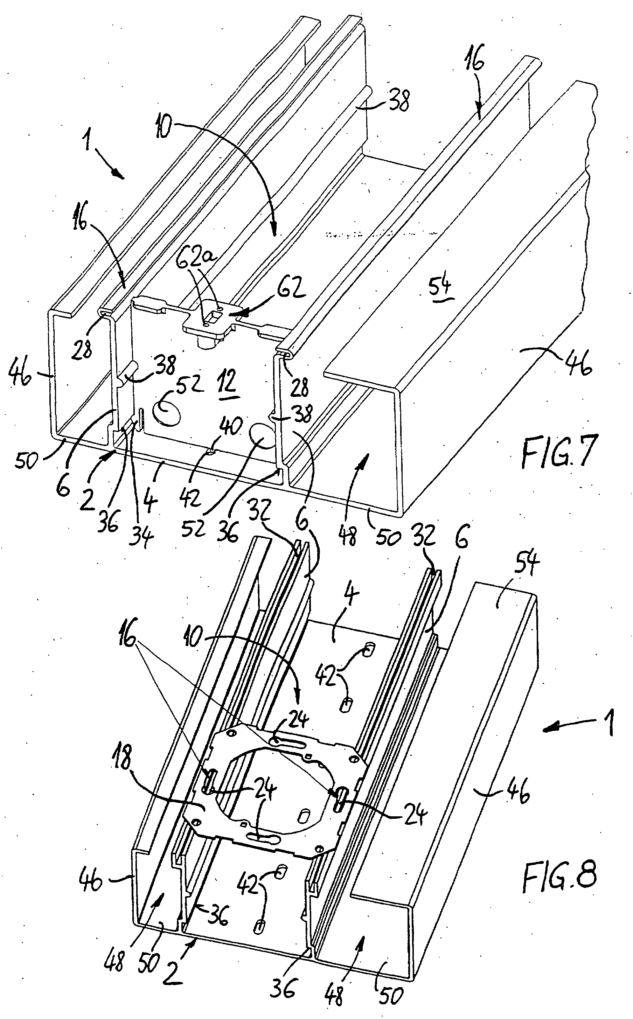

Gemäß Fig. 7 kann hierzu mit Vorteil vorgesehen sein, daß das jeweilige Wandungsteil 12 zwei seitliche, elastische Rastnasen 34 aufweist, die seitliche Rastkanten 36 der Längsseitenwandungen 6 formschlüssig hintergreifen. Zusätzlich kann gegebenenfalls an den Längsseitenwandungen 6 jeweils eine längsverlaufende Führungsrippe 38 gebildet sein, wobei das Wandungsteil 12 mit entsprechenden Ausnehmungen auf den Führungsrippen 38 sitzt. Zusätzlich kann ein Positionieransatz 40 des Wandungsteils 12 in eine von mehreren Positionsöffnungen 42 der Bodenwandung 4 eingreifen.

Vorzugsweise bildet jedes Wandungsteil 12 mit seinem oberen Randbereich eine Auflagefläche 44 für den jeweiligen Tragring 12, wobei diese Auflagefläche 44 mit der Auflageebene 30 (Fig. 12 und 13) zusammenfällt. Der Tragring 18 kann gegebenenfalls auch zusätzlich an mindestens einem der Wandungsteile 12 befestigt, beispielsweise verschraubt werden (vgl. z.B. Fig. 2).

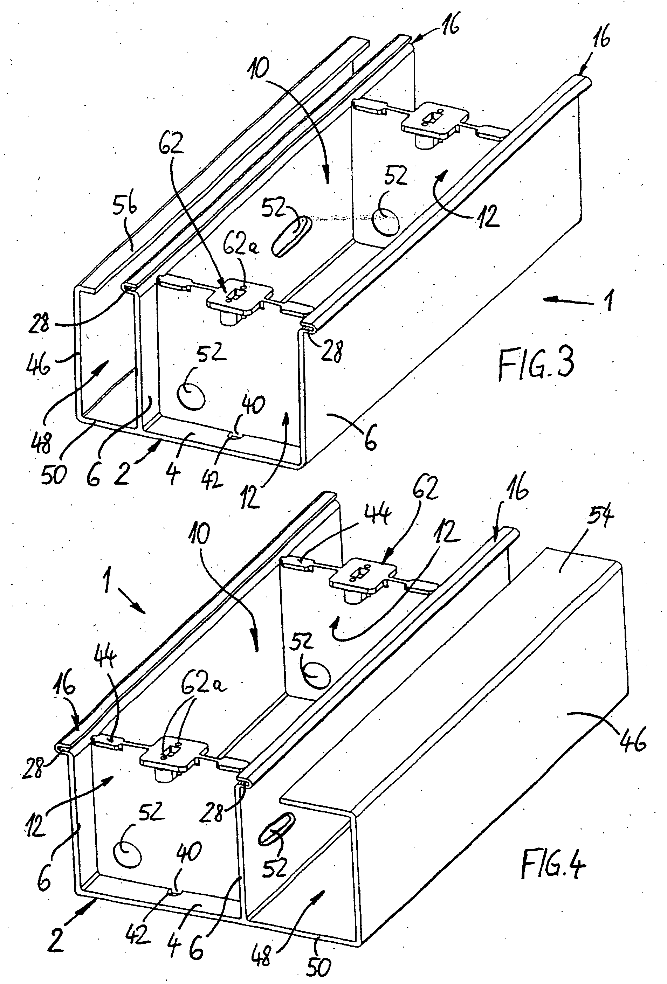

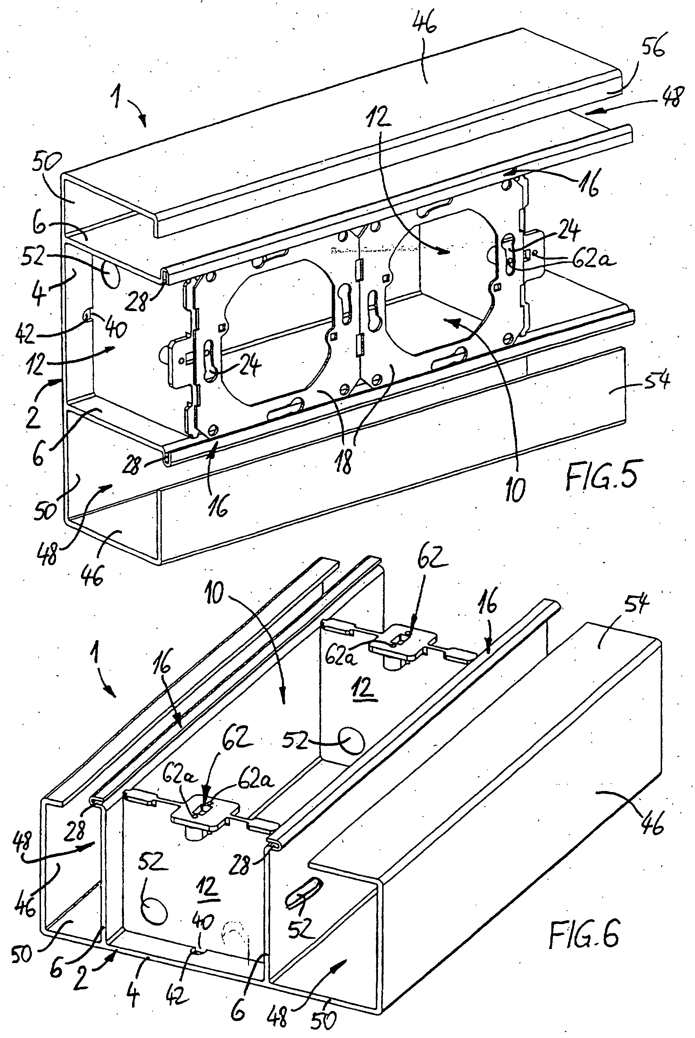

Im Hinblick darauf, daß der Innenraum des Profilabschnittes 2 zumindest bezüglich seiner quer zur Längserstreckung und parallel zur Bodenwandung 4 gemessenen Breite zur Aufnahme von Installationsgeräten genutzt wird, ist es vorteilhaft, wenn zumindest auf einer Längsseite des Profilabschnittes 2 zwischen der jeweiligen Längsseitenwandung 6 und einer dazu etwa parallel beabstandeten Außenwandung 46 ein Aufnahmekanal 48 für Kabel und dergleichen Leitungen gebildet ist. Bei allen Ausführungen nach den Fig. 5 bis 13 sind vorteilhafterweise zwei entsprechende Aufnahmekanäle 48 vorgesehen, und zwar auf beiden Seiten jeweils im Anschluß an jede Längsseitenwandung 6. Hierbei sind diese beiden Aufnahmekanäle 48 vorzugsweise bezüglich ihres lichten Innenquerschnittes unterschiedlich groß, insbesondere unterschiedlich breit, ausgebildet. Bei den Ausführungen nach Fig. 3 und 4 ist jeweils nur auf einer der beiden Seiten ein Aufnahmekanal 48 gebildet. Im Falle der Fig. 3 handelt es sich um einen schmaleren und bei Fig. 4 um einen breiteren Aufnahmekanal 48. Hierbei ist jede den jeweiligen Aufnahmekanal 48 begrenzende Außenwandung 46 zweckmäßigerweise über einen Bodensteg 50 einstückig mit dem Profilabschnitt 2 verbunden, wobei der Bodensteg 50 im wesentlichen in der.gleichen Ebene wie die Bodenwandung 4 liegt.

Bei der in Fig. 1 und 2 veranschaulichten Ausführungsform handelt es sich um eine "Minimalversion" ohne Aufnahmekanäle 48. Vor allem bei dieser Ausführung, bevorzugt aber auch bei allen anderen Ausführungsformen, besitzen die Wandungsteile 12 vorteilhafterweise Durchführöffnungen 52 für Kabel und sonstige Leitungen, die durch den Profilabschnitt 2 zwischen den eingesetzten Installationsgeräten und der Bodenwandung 4 verlaufen.

Bei den Ausführungsformen, bei denen mindestens ein seitlicher Aufnahmekanal 48 vorgesehen ist, weist die jeweils benachbarte Längsseitenwandung 6 zweckmäßigerweise ebenfalls entsprechende Durchführöffnungen 52 auf, um die in dem jeweiligen Aufnahmekanal 48 verlaufenden Kabel jeweils zu einem der innerhalb des Profilabschnittes 2 untergebrachten Installationsgeräte führen zu können.

Was nun den oben bereits erwähnten Verschlußdeckel 14 betrifft, so ist dieser auf praktisch beliebige Weise mit dem Profilabschnitt 2 verbindbar, insbesondere verrastbar. So kann der Verschlußdeckel 14 mit mindestens einer der beiden Längswandungen 6 und/oder mit mindestens einer der Außenwandungen 46 verbunden bzw. verrastet werden. Wie in Fig. 12 und 13 dargestellt ist, ist bei der bevorzugten Ausführungsform mit beidseitigen Aufnahmekanälen 48 vorgesehen, daß der Verschlußdeckel 14 mit beiden Außenwandungen 46 verbunden wird. Dabei weist der Verschlußdeckel 14 zweckmäßigerweise eine konvexe Wölbung in seinem den Bereich des eigentlichen, inneren Profilabschnittes 2 überspannenden Bereich auf. Dadurch.ergibt sich auch eine sehr ansprechende Optik von der Sichtseite her. Trotz der Asymmetrie der beiden Aufnahmekanäle 48 kann der Verschlußdeckel 14 bezüglich des inneren Profilabschnittes 2 vorteilhafterweise symmetrisch ausgebildet sein. Hierzu ist im Bereich des breiteren Aufnahmekanals 48 vorgesehen, daß sich an die Außenwandung 46 ein dem Bodensteg 50 gegenüberliegender und hierzu etwa paralleler Wandungssteg 54 anschließt. Zweckmäßigerweise ist im Bereich des anderen, schmaleren Aufnahmekanals 48 ebenfalls ein kürzerer Wandungssteg 56 vorgesehen, und diese Wandungsstege 54, 56 weisen endseitige Raststege 58 auf, auf die der Verschlußdeckel 14 mit entsprechenden Rastaufnahmen 60 aufsetzbar ist. Die Zuordnung der Raststege 58 und Rastaufnahmen 60 kann jedoch durchaus auch umgekehrt vorgesehen sein.

Gemäß einer weiteren vorteilhaften Ausgestaltung der Erfindung können spezielle Haltemittel 62 z.B. für mindestens einen nicht dargestellten Kommunikationsgeräteeinsatz vorgesehen sein, bei dem es sich um ein derart relativ schmales Gerät, beispielsweise um eine Telefon-Steckdose oder dergleichen handelt, daß es nicht direkt an den Längsseitenwandungen 6 befestigt werden kann. Statt dessen erfolgt bevorzugt eine mittelbare Halterung über die Wandungsteile 12, wozu vorteilhafterweise die Haltemittel 62 jeweils mit einem der Wandungsteile 12 integriert (einstückig) ausgebildet sind. Hierzu wird beispielsweise auf Fig. 6 und 7 verwiesen. Wie dargestellt sind die Haltemittel 62 als Auflageelemente mit Schraublöchern 62a für Tragteile der Kommunikationsgeräte ausgebildet. Dabei liegen die Schraublöcher 62a bevorzugt etwa mittig zwischen den Längsseitenwandungen 6. Alternativ zu der bevorzugten einstückigen Ausbildung können die Haltemittel 62 auch als separate Teile an den Wandungsteilen 12 befestigt, z.B. aufgeklammert, werden.

Wie sich aus Fig. 2 sowie auch aus Fig. 5 ergibt, können hierdurch die Wandungsteile 12 vorteilhafterweise auch zur zusätzlichen Befestigung der Tragringe 18 verwendet werden, beispielsweise indem nicht dargestellte Schrauben durch Öffnungen 24 des Tragringes 18 hindurch in die Schraublöcher 62a der Wandungsteile 12 eingeschraubt werden. Die Wandungsteile 12 dienen dabei vorteilhafterweise auch zur abstützenden Auflage der Tragringe 18.

Wie sich noch aus Fig. 11 ergibt, kann mit Vorteil mindestens ein Verbinderstück 64 vorgesehen sein, mit dem jeweils zwei benachbarte Tragringe 18 fixierend miteinander verbunden werden können. Wie dargestellt, kann das Verbinderstück 64 streifenförmig ausgebildet sein und Positionsansätze 66 aufweisen, die in Öffnungen der Tragringe 18 eingreifen. Gegebenenfalls kann eine zusätzliche oder alternative Verschraubung der Tragringe 18 mit dem Verbinderstück 64 vorgesehen sein. Diese Maßnahme dient zur sicheren Fixierung der beiden Tragringe 18 relativ zueinander, um insbesondere das übliche Abstands-"Stichmaß" von in der Regel 71 mm vorzusehen.

Bei den Ausführungsformen nach Fig. 11 und 13 sind zur Befestigung der gesamten Gerätedose 1 auf einer Montagefläche spezielle Halteprofilabschnitte 68 gebildet. Diese insbesondere im Bereich der Bodenstege 50 und/oder der Bodenwandung 4 gebildeten Halteprofilabschnitte 68 sind im Querschnitt jeweils hakenförmig ausgebildet, und sie wirken mit nicht dargestellten, inbesondere schienenförmigen Montageelementen zusammen.

Die erfindungsgemäße Gerätedose 1 läßt sich sehr wirtschaftlich herstellen, da der innere Profilabschnitt 2 zusammen mit den Aufnahmekanälen 46 als Strangprofil aus Kunststoff geformt werden kann. Auch die Montage ist einfach und schnell durchführbar, indem der Profilabschnitt 2 von dem Profilstrang 8 (Fig. 11) abgelängt wird und die Wandungsteile 12 montiert werden. Die Installationsgeräte lassen sich dann sehr schnell über die Tragringe 18 einsetzen und befestigen (Tragring-Schnellbefestigung). Der Verschlußdeckel 14 erhält vor dem Aufsetzen entsprechende Öffnungen in den Bereichen aller eingesetzten Installationsgeräte.

Die erfindungsgemäße Gerätedose 1 ist für zahlreiche Einsatzzwecke verwendbar, insbesondere als Einbaudose in Kabelkanälen und sonstigen Aufnahmegehäusen, als AufputzDose, aber auch sogar als Unterputz-Dose. Für den jeweiligen Anwendungsfall weist die Gerätedose 1 außenseitig entsprechend angepaßte bzw. geeignete Halterungsmittel auf. Beispielsweise sind als Unterputz-Dose Wand-Verankerungsmittel angeformt oder befestigt (nicht dargestellt).

## Patentansprüche

1. Gerätedose (1) zur Aufnahme von Elektro-Installationsgeräten, wie Schalter, Steckdosen und dergleichen, mit einem einen einseitig offenen Geräte-Aufnahmeraum (10) begrenzenden Dosenkörper, wobei der Dosenkörper aus einem Profilabschnitt (2) eines im Querschnitt im wesentlichen U-förmigen Profilstranges (8) und zwei mit dem Profilabschnitt (2) zur Begrenzung des Aufnahmeraumes (10) in Profillängsrichtung gesehen verbindbaren Wandungsteilen (12) besteht,
**dadurch gekennzeichnet, dass** der Profilabschnitt (2) bzw. der Profilstrang (8) und jedes Wandungsteil (12) in Anpassung aneinander derart ausgebildet sind, dass jedes Wandungsteil (12) wahlweise an verschiedenen Stellen der Längserstreckung einsetzbar ist.

2. Gerätedose nach Anspruch 1,
**dadurch gekennzeichnet, daß** jedes Wandungsteil (12) lösbar und insbesondere kraftund/oder formschlüssig in dem Profilabschnitt (2) befestigbar ist.

3. Gerätedose nach Anspruch 1 oder 2,
**dadurch gekennzeichnet, daß** der Profilabschnitt (2) aus einer Bodenwandung (4) und zwei Längsseitenwandungen (6) besteht, wobei jedes Wandungsteil (12) kraft- und/oder formschlüssig mit den Längsseitenwandungen (6) und/oder mit der Bodenwandung (4) verbindbar, insbesondere verrastbar ist.

4. Gerätedose nach einem der Ansprüche 1 bis 3,
**dadurch gekennzeichnet, daß** der Profilabschnitt (2) im Bereich seiner Längsseitenwandungen (6) Halterungsmittel (16) zur unmittelbaren Befestigung mindestens eines Geräteeinsatzes eines Elektro-Installationsgerätes aufweist.

5. Gerätedose nach Anspruch 4,
**dadurch gekennzeichnet, daß** die Halterungsmittel (16) zur Halterung eines Tragringes (18) des jeweiligen Installationsgerätes im von der Bodenwandung (4) abgekehrten Randbereich der Längsseitenwandungen (6) vorgesehen sind.

6. Gerätedose nach Anspruch 5,
**dadurch gekennzeichnet, daß** der Tragring (18) in einer auf freien Längskanten (20) der Längsseitenwandungen (6) aufliegenden Position mittels Klammerelementen (22) kraft- und/oder formschlüssig mit den Längsseitenwandungen (6) verbindbar ist.

7. Gerätedose nach Anspruch 5,
**dadurch gekennzeichnet, daß** die Längsseitenwandungen (6) als Halterungsmittel (16) einander zugekehrte, längsverlaufende Haltenuten (28) zur halternden Aufnahme von gegenüberliegenden Randbereichen des Tragringes (18) aufweisen.

8. Gerätedose nach Anspruch 5,
**dadurch gekennzeichnet, daß** der Tragring (18) mittels Schrauben an den Längsseitenwandungen (6) befestigbar ist, wozu vorzugsweise im Randbereich jeder Längsseitenwandung (6) eine längsverlaufende, in die von der Bodenwandung (4) wegweisende Richtung offene Montagenut (32) derart gebildet ist, daß jeweils eine insbesondere selbstschneidende Schraube durch eine Öffnung (24) des auf den Längsseitenwandungen (6) aufliegenden Tragringes (18) hindurch in die jeweilige Montagenut (32) einschraubbar ist.

9. Gerätedose nach einem der Ansprüche 1 bis 8,
**dadurch gekennzeichnet, daß** zumindest auf einer Längsseite des Profilabschnittes (2) zwischen der jeweiligen Längsseitenwandung (6) und einer dazu etwa parallel beabstandeten Außenwandung (46) ein Aufnahmekanal (48) für Kabel und dergleichen gebildet ist.

10. Gerätedose nach Anspruch 9,
**dadurch gekennzeichnet, daß** die/ jede Außenwandung (46) über einen Bodensteg (50) einstückig mit dem Profilabschnitt (2) verbunden ist.

11. Gerätedose nach einem der Ansprüche 1 bis 10,
**gekennzeichnet durch** einen mit dem Profilabschnitt (2) lösbar verbindbaren Verschlußdekkel (14).

12. Gerätedose nach Anspruch 11,
**dadurch gekennzeichnet, daß** der Verschlußdeckel (14) mit mindestens einer der beiden Längsseitenwandungen (6) und/oder mit mindestens einer der Außenwandungen (46) verbindbar, insbesondere verrastbar ist.

13. Gerätedose nach einem der Ansprüche 1 bis 12,
**gekennzeichnet durch** zusätzliche Haltemittel (62) insbesondere für mindestens einen Kommunikationsgeräteeinsatz oder dergleichen, wobei diese Haltemittel (62) vorzugsweise jeweils mit einem der Wandungsteile (12) integriert ausgebildet sind.

14. Gerätedose nach einem der Anspruch 1 bis 13,
**gekennzeichnet durch** Durchführöffnungen (52) für Kabel und dergleichen im Bereich mindestens einer der Längsseitenwandungen (6) und/oder im Bereich mindestens eines der Wandungsteile (12).

15. Gerätedose nach einem der Ansprüche 1 bis 14,
**gekennzeichnet durch** mindestens ein Verbinderstück (64) zum fixierenden Verbinden von zwei benachbarten Tragringen (18) zweier Installationsgeräte.

16. Gerätedose nach einem der Ansprüche 1 bis 15,
**dadurch gekennzeichnet, daß** der Dosenkörper außenseitige Halterungsmittel, beispielsweise für einen Einsatz als Unterputz-Dose Wand-Verankerungsmittel, aufweist.

17. Gerätedose nach einem der Ansprüche 1 bis 16,
**gekennzeichnet durch** etwa in der Ebene der Bodenwandung (4) liegende, randliche, im Querschnitt im wesentlichen hakenförmige Halteprofilabschnitte (68) zum Befestigen an insbesondere schienenförmigen Montageelementen.

## Claims

1. Device box (1) for receiving electrical installation devices, such as switches, sockets and the like, with a box body bounding a device receiving space (10) that is open on one side, the box body comprising a profile section (2) of a cross-sectionally substantially U-shaped extruded profile (8) and two wall parts (12) which can be connected to the profile section (2) for bounding the receiving space (10), seen in the longitudinal direction of the profile, **characterized in that** the profile section (2) or the extruded profile (8) and each wall part (12) are formed to match one another in such a way that each wall part (12) can be inserted according to choice at different points of the longitudinal extent.

2. Device box (1) according to Claim 1, **characterized in that** each wall part (12) can be fastened in the profile section (2) detachably and in particular with non-positive and/or positive engagement.

3. Device box according to Claim 1 or 2, **characterized in that** the profile section (2) comprises a bottom wall (4) and two longitudinal side walls (6), each wall part (12) being able to be connected, in particular locked, with non-positive and/or positive engagement to the longitudinal side walls (6) and/or to the bottom wall (4).

4. Device box according to one of Claims 1 to 3, **characterized in that** the profile section (2) has in the region of its longitudinal side walls (6) securing means (16) for the direct fastening of at least one device insert of an electrical installation device.

5. Device box according to Claim 4, **characterized in that** the securing means (16) are provided for securing a supporting ring (18) of the respective installation device in the edge region of the longitudinal side walls (6) that is remote from from the bottom wall (4).

6. Device box according to Claim 5, **characterized in that** the supporting ring (18) can be connected in a position in which it is resting on free longitudinal edges (20) of the longitudinal side walls (6) to the longitudinal side walls (6) with non-positive and/or positive engagement by means of clamp elements (22).

7. Device box according to Claim 5, **characterized in that** the longitudinal side walls (6) have as securing means (16) mutually facing, longitudinally running retaining grooves (28) for the securing reception of opposing edge regions of the supporting ring (18).

8. Device box according to Claim 5, **characterized in that** the supporting ring (18) can be fastened to the longitudinal side walls (6) by means of screws, for which purpose a longitudinally running mounting groove (32), which is open in the direction pointing away from the bottom wall (4), is preferably formed in the edge region of each longitudinal side wall (6) in such a way that in each case a screw, in particular a self-tapping screw, can be screwed into the respective mounting groove (32) through an opening (24) in the supporting ring (18) resting on the longitudinal side walls (6).

9. Device box according to one of Claims 1 to 8, **characterized in that** a receiving channel (48) for cables and the like is formed at least on one longitudinal side of the profile section (2), between the respective longitudinal side wall (6) and an outer wall (46) parallel to and at a distance from the latter.

10. Device box according to Claim 9, **characterized in that** the/each outer wall (46) is integrally connected to the profile section (2) via a bottom web (50).

11. Device box according to one of Claims 1 to 10, **characterized by** a closure cover (14) which can be detachably connected to the profile section (2).

12. Device box according to Claim 11, **characterized in that** the closure cover (14) can be connected, in particular locked, to at least one of the two longitudinal side walls (6) and/or to at least one of the outer walls (46).

13. Device box according to one of Claims 1 to 12, **characterized by** additional retaining means (62), in particular for at least one communication device insert or the like, these retaining means (62) preferably being respectively integrated with one of the wall parts (12).

14. Device box according to one of Claims 1 to 13, **characterized by** lead-through openings (52) for cables and the like in the region of at least one of the longitudinal side walls (6) and/or in the region of at least one of the wall parts (12).

15. Device box according to one of Claims 1 to 14, **characterized by** at least one connector piece (64) for the fixing connection of two neighbouring supporting rings (18) of two installation devices.

16. Device box according to one of Claims 1 to 15, **characterized in that** the box body has outer securing means, for example for use as a wall anchoring means for a flush-type box.

17. Device box according to one of Claims 1 to 16, **characterized by** edge retaining-profile sections (68), lying approximately in the plane of the bottom wall (4) and substantially in the form of hooks, for fastening on mounting elements, in particular in the form of rails.

## Revendications

1. Boîte d'appareil (1) destinée à contenir des appareils d'installation électrique,
tels que des interrupteurs, prises et analogues, comprenant un corps de boîte qui délimite un espace de logement d'appareil (10) ouvert sur un côté, le corps de boîte étant composé d'un tronçon de profilé (2) appartenant à un extrudé profilé (8) sensiblement en forme de U en section transversale et de deux parties de parois pouvant être reliées, vu dans la direction longitudinale du profilé, au tronçon de profilé (2) pour délimiter l'espace de logement (10),
**caractérisé en ce que** le tronçon de profilé (2) ou le profilé extrudé (8) et chaque partie de paroi (12) sont réalisés de façon adaptée l'un à l'autre de manière que chaque partie de paroi (12) puisse être mise en place, au choix, à différents endroits de l'extension longitudinale.

2. Boîte d'appareil selon la revendication 1,
**caractérisée en ce que** chaque partie de paroi (12) peut être fixée dans le tronçon de profilé (2) de façon démontable et en particulier par une liaison opérant par action de force et/ou par complémentarité de forme.

3. Boîte d'appareil selon la revendication 1 ou 2
**caractérisée en ce que** le tronçon de profilé (2) est composé d'une paroi de fond (4) et de deux parois latérales longitudinales (6), chaque partie de paroi (12) pouvant être reliée, en particulier enclenchée, aux parois longitudinales latérales (6) et/ou à la paroi de fond (4) par action de force et/ou par complémentarité de forme.

4. Boîte d'appareil selon une des revendications 1 à 3,
**caractérisée en ce que** le tronçon de profilé (2) présente, dans la région de ses parois longitudinales latérales (6), des moyens de retenue (16) destinés à la fixation directe d'au moins un organe intérieur d'un appareil d'installation électrique.

5. Boîte d'appareil selon la revendication 4,
**caractérisée en ce que** les moyens de retenue (16) sont prévus pour retenir un anneau de support (18) de l'appareil d'installation considéré dans la région marginale des parois longitudinales latérales (6) qui sont éloignées de la paroi de fond (4).

6. Boîte d'appareil selon la revendication 5,
**caractérisée en ce que** l'anneau de support (18) peut être assemblé aux parois longitudinales latérales (6) dans une position en appui sur des bords longitudinaux libres (20) des parois longitudinales latérales (6) au moyen d'éléments du type des crampons (22), par une liaison opérant par action de force et/ou par complémentarité de forme.

7. Boîte d'appareil selon la revendication 5,
**caractérisée en ce que** les parois longitudinales latérales (6) présentent, comme moyen de retenue (16), des rainures de retenue (28) dirigées l'une vers l'autre, qui s'étendent longitudinalement, destinées à recevoir des régions marginales opposées de l'anneau de support (18) en les retenant.

8. Boîte d'appareil selon la revendication 5,
**caractérisée en ce que** l'anneau de support (18) peut être fixé au moyen de vis aux parois longitudinales latérales (6), ce pourquoi il est prévu, de préférence dans la région marginale de chaque paroi longitudinale latérale (6), une rainure de montage (32) s'étendant longitudinalement, ouverte dans la direction qui s'éloigne de la paroi de fond (4), de manière qu'à chaque fois, une vis, en particulier autotaraudeuse, puisse être vissée dans la rainure de montage (32) correspondante à travers une ouverture (24) de l'anneau de support (18) appuyé sur les parois longitudinales latérales (6).

9. Boîte d'appareil selon une des revendications 1 à 8,
**caractérisée en ce qu'**au moins sur un côté longitudinal du tronçon de profilé (2), est formé un canal de logement (48) pour câbles et analogue, entre la paroi longitudinale latérale (6) considérée et une paroi extérieure (46) qui en est espacée dans une position à peu près parallèle.

10. Boîte d'appareil selon la revendication 9,
**caractérisée en ce que** la paroi extérieure ou chaque paroi extérieure (46) est reliée en une seule pièce au tronçon de profilé (2), par l'intermédiaire d'une nervure de fond (50).

11. Boîte d'appareil selon une des revendications 1 à 10,
**caractérisée par** un couvercle de fermeture (14) qui peut être relié de façon démontable au tronçon de profilé (2).

12. Boîte d'appareil selon la revendication 11,
**caractérisée en ce que** le couvercle de fermeture (14) peut être relié, en particulier enclenché, à au moins une des deux parois longitudinales latérales (6) et/ou à au moins une des parois extérieures (46).

13. Boîte d'appareil selon une des revendications 1 à 12,
**caractérisée par** des moyens de retenue supplémentaires (62), en particulier pour au moins un organe intérieur d'appareil de communication ou analogue, ces moyens de retenue (62) étant de préférence intégrés à une des parties de paroi (12),

14. Boîte d'appareil selon une des revendications 1 à 13,
**caractérisée par** des ouvertures de passage (52) pour câbles et analogues dans la région d'au moins une des parois longitudinales latérales (6) et/ou dans la région d'au moins une des parties de parois (12).

15. Boîte d'appareil selon une des revendications 1 à 14,
**caractérisée par** au moins un élément d'assemblage (64) prévu pour l'assemblage immobilisant de deux anneaux de support (18) adjacents appartenant à deux appareils d'installation.

16. Boîte d'appareil selon une des revendications 1 à 15,
**caractérisée en ce que** le corps de boîte présente des moyens de retenue extérieurs, par exemple pour un organe intérieur sous la forme d'un moyen d'ancrage mural pour socle sous crépi.

17. Boîte d'appareil selon une des revendications 1 à 16,
**caractérisée par** des tronçons de profilés de retenue marginaux (68) sensiblement en forme de crochet en section transversale, situés à peu près dans le plan de la paroi de fond (4), destinés à la fixation à des éléments de montage en particulier en forme de barres.
